# EUROPÄISCHE PATENTANMELDUNG

(11) **EP 1 181 976 A2**
(43) Veröffentlichungstag der Anmeldung: **27.02.2002**
(21) Anmeldenummer: 01118950.3
(22) Anmeldetag: 04.08.2001
(51) Int. Cl.: B01J 19/30, B01J 19/32, B01D 3/32, B01J 3/03

(54) **Verbessertes Verfahren zur Aufbereitung von Stoffen in chemischen Apparaten mit Einbauten zum Stoffaustausch**

(30) Priorität: 25.08.2000 DE 10041758
(71) Anmelder: BASF AKTIENGESELLSCHAFT, 67056 Ludwigshafen (DE)
(72) Erfinder: Eiermann, Matthias, Dr., 67117 Limburgerhof (DE); Hennig, Gunnar, Dr., 68165 Mannheim (DE)

(57) **Zusammenfassung**

Verfahren zur Aufbereitung von Stoffen in chemischen Apparaten mit Einbauten zum Stoffaustausch wobei man stabilisiertes Fasermaterial als Randabdichtung und / oder mechanischer Schutz einsetzt.

## Beschreibung

In der chemischen Industrie wird eine Vielzahl chemischer Apparate mit Einbauten zum Stoffaustausch eingesetzt. Beispielhaft können hier Destillations-, Rektifikations-, Extraktions-, Adsorptions- und Reaktionskolonnen erwähnt werden.

Bei Kolonnen zur Auftrennung von Stoffgemischen nach Stoffeigenschaften wie Siedepunkten oder zur Stoffadsorption unterscheidet man prinzipiell zwischen Bodenkolonnen, Kolonnen mit Füllkörperschüttungen und Kolonnen mit geordneten Packungen. Beispiele für Bodenkolonnen sind Kolonnen mit Glocken-, Tunnel-, Ventil- oder Siebböden. In Füllkörperschüttungen können Raschigringe, Pall-Ringe, Berlsättel etc. eingesetzt werden. Bei geordneten Packungen kennt man verschiedene Typen von kanalbildenden, miteinander verbundenen gewellten Schichten aus Drahtgewebe, Glas, Keramik oder Kunststoffen.

Viele dieser Kolonnenkonstruktionen können bei korrosiven Medien wie organischen oder anorganischen Säuren wie z. B. Schwefelsäure oder Methansulfonsäure nur schwerlich eingesetzt werden, da Werkstoffe verwendet werden müssen, mit denen diese Konstruktionen wenn überhaupt nur sehr teuer und aufwendig gebaut werden können. In diesem Zusammenhang liegen korrosive Medien beispielsweise dann vor, wenn das Medium stark sauer ist (pH-Wert <2), insbesondere auch wenn es keine passivierenden oxidativen Eigenschaften hat, wie dies z.B. in der EP-A 931 854 beschrieben ist, oder wenn Halogenide wie z.B. Chlorid enthalten sind.

In vielen dieser Anwendungsfälle ist man auf die Verwendung emaillierter Kolonnen mit Einbauten aus Glas, Keramik oder Tantal (und Tantal/Wolfram-Legierung) angewiesen.

Als Dichtungswerkstoffe werden in diesem Bereich vornehmlich perfluorierte Polymere wie Poly(tetrafluorethylen) (PTFE) oder Poly(perfluoralkoxy)trifluorethylen (PFA) eingesetzt, da andere Dichtungsmaterialien meist eine ungenügende thermische und/oder chemische Beständigkeit aufweisen. Zum Einsatz kommen diese Werkstoffe an den abzudichtenden Trennfugen, so z.B. als Dichtungen an den Kolonnenflanschen, als mechanische Ausgleichsschicht zwischen Packung und Tragrost sowie zwischen Tragrost oder Sammler/Verteiler und Auflagepunkten sowie bei emaillierten Schüttungskolonnen als Schutzhemd gegen mechanische Zerstörung zwischen Schüttung und Emailschicht, bei Kolonnen mit geordneten Packungen als Randabdichtung zur Verbesserung der Trennleistung. Dabei ist neben der chemischen Beständigkeit die mechanische Flexibilität der Werkstoffe von entscheidender Bedeutung, da sie durch Eigenverformung Unebenheiten ausgleichen und Last verteilen.

Es hat sich nun gezeigt, daß z.B. bei der Aufarbeitung korrosiver Stoffe wie Schwefelsäure- oder Methansulfonsäure-haltiger Medien diese perfluorierten Polymere Probleme bereiten können, da sie unter thermischer Beanspruchung in solchen Medien bereitwillig Fluorid im Spurenbereich an das Medium abgeben. Fluorid bzw. die daraus abgeleitete Flußsäure führt aber schon in Konzentrationen von wenigen ppm zu Korrosionsschäden an Glas, Email und Tantal.

So beschreibt die Firma Pfaudler, ein Hersteller emaillierter Reaktionsapparate und Kolonnen, daß eine PTFE-Leitung schon beim Durchleiten von 160°C heißer Schwefelsäure genügend Fluorid abspaltet, um Korrosionsschäden an nachfolgenden emaillierten Apparaten hervorzurufen (Katalog und Druckschrift 278 der Fa. Pfaudler-Werke GmbH, D-68721 Schwetzingen). Als Grenzwert wird hierbei eine Konzentration von 10 ppm angesehen. Die Firma De Dietrich, ebenfalls ein Hersteller emaillierter Apparate für den Chemieanlagenbau, nennt eine Grenze von 20 ppm Fluorid (Katalog "Lieferprogramm" der Fa. De Dietrich, F-67110 Zinswiller, S.9). Zwar kann man diese Korrosionsproblematik dadurch mildern, daß man dem Medium gelöste Kieselsäure zugibt, doch ist dieses Verfahren nicht immer anwendbar und kann auch zur Feststoffbildung führen, die Störungen an nachfolgenden Apparaten bewirkt.

Auch für Tantal sind bei Anwensenheit von Fluorid die Beständigkeitsgrenzen rasch erreicht. Die Firma Plansee, Hersteller von Tantal für den Chemieapparatebau, nennt eine Grenzkonzentration von 2 ppm Fluorid bei Raumtemperatur (Katalog "Tantal" der Fa. Plansee Aktiengesellschaft, A-6600 Reutte/Tirol, S. 13).

Der unerwünschte Austritt fluorhaltiger Verbindungen erhöht sich mit steigender Temperatur. Hierbei sind die konkreten Werte abhängig von den jeweils vorliegenden Stoffen. Bei methansulfonsäurehaltigen Medien können schon bei einer Temperatur von etwa 100°C fluorhaltige Verbindungen austreten. Allgemein beginnen diese Temperaturen bei etwa 60°C, bevorzugt ab ca. 100°C.

Es stellte sich somit die Aufgabe, ein verbessertes Verfahren zur Aufbereitung von Stoffen in chemischen Apparaten mit Einbauten zum Stoffaustausch zu finden, das den genannten Nachteilen abhilft und welches eine verfahrenstechnisch einfache Aufbereitung in hoher Qualität ermöglicht. Demgemäss wurde ein Verfahren zur Aufbereitung von Stoffen in chemischen Apparaten mit Einbauten zum Stoffaustausch gefunden, welches dadurch gekennzeichnet ist, dass man stabilisiertes Fasermaterial als Randabdichtung und / oder mechanischer Schutz einsetzt. Weiterhin betrifft die vorliegende Erfindung die Verwendung des stabilisierten Fasermaterials zur Durchführung des erfindungsgemässen Verfahrens sowie bevorzugte Ausführungsformen.

Als Fasermaterial eignen sich mineralische Fasern wie Glasfaser und Steinwolle sowie Kohlefasern.

Die Stabilisierung der Fasern kann in unterschiedlicher Art und Weise erfolgen, z.B. durch verweben oder verfilzen. Generell ist eine gewisse Rückstellkraft erforderlich, deren Größe stark von dem jeweiligen Anforderungsprofil abhängt. Bevorzugt verwendet man stabilisierte Glasfaser, sog. Glasgewebe. Bei dem eingesetzten Glasgewebe kann es sich um geordnet verflochtenes oder um ungeordnet filzartiges Gewebe handeln. Das Gewebe kann ein- oder mehrlagig sein. Es kann in Streifen-, Bahnen- oder Schlauchform eingesetzt werden. Es sind verschiedene dem Fachmann bekannte Glassorten einsetzbar, beispielsweise das im Chemieanlagenbau gängige Borosilikatglas oder das für das Glasfasergewebe standardmäßig verwendete E-Glas oder die korrosionsbeständigen Typen C-Glas und ECR-Glas (z.B. Firma Rayelex Ltd.).

Überraschend wurde nun gefunden, daß man in allen genannten Anwendungsfällen - z.B. Randabdichtung, Kolonnenhemd und Auflageflächen - stabilisiertes Fasermaterial, bevorzugt Glasfasergewebe zur Abdichtung einsetzen kann. Dieses Fasermaterial ist ein flexibler Werkstoff und in der Lage, Unebenheiten auszugleichen. In Gegenwart von Flüssigkeit saugt es sich bereitwillig voll und stellt dann durch die Kapillarkräfte, die die Flüssigkeit in ihm festhaltenen, eine Barriere für weitere Flüssigkeit dar. Kohlefasergewebe wird beispielsweise von der Firma SGL Carbon, Sigri Great Carbon GmbH, Meitingen unter dem Namen Sigratex vertrieben, das bevorzugte Glasfasergewebe ist beispielsweise bei der Firma Alfons Markert, Neumünster unter dem Namen Zetex erhältlich.

Solches Glasfasergewebe wird in der Technik vielfältig eingesetzt und ist in unterschiedlichsten Arten verfügbar. Beispielsweise wird es als strukturgebende Komponente in Glasfaser-verstärkten Kunststoffen (GFK) eingesetzt oder als gewebtes Band oder Schlauch zur thermischen Isolierung von heißen Gegenständen, z.B. Rohren, verwendet. Glas wird in verschiedenen Zusammensetzungen je nach Anwendungsfall hergestellt und zeigt als Werkstoff in den meisten Fällen eine ähnliche Korrosionsbeständigkeit wie das chemisch verwandte Email.

Durch das erfindungsgemäße Verfahren wird die Gesamtoberfläche der im Mediumkontakt stehenden perfluorierten Werkstoffe stark minimiert. Dies führt dazu, dass auch der unerwünschte Eintrag von Fluorid in das Medium ebenfalls stark verringert wird.

Die größten Beiträge zur Gesamtoberfläche in einer Destillationskolonne liefern die bereits beschriebenen Randabdichtungen bei Kolonnen mit strukturierten Packungen bzw. das bereits beschriebene Kolonnenhemd bei emaillierten Kolonnen mit Füllkörperschüttungen sowie die erwähnten Auflageflächen.

Durch das erfindungsgemäße Verfahren können diese Stellen in einer Art und Weise abgedichtet oder geschützt werden, die keinen Austritt fluorhaltiger Verbindungen bewirkt.

Es hat sich als vorteilhaft erwiesen, nach Einbau des Fasermaterials eine Spülung des Apparates z. B. mit Wasser durchzuführen, um durch den Einbau eingebrachte Faserreste zu entfernen, die ansonsten eine schädliche Wirkung z.B. auf nachfolgende Pumpen oder Ventile haben können.

Im folgenden werden einige bevorzugte Ausgestaltungen des erfindungsgemäßen Verfahrens näher beschrieben.

### Glasgewebe zur Randabdichtung von Kolonnen mit strukturierten Packungen

Je nach Anwendungsfall und Fertigungstoleranzen ergibt sich bei Kolonnen mit strukturierten Packungen zwischen Kolonnenschuß und Packung ein Spalt von wenigen Millimetern bis hin zu mehreren Zentimetern. Es ist wichtig, diesen Spalt in regelmäßigen Abständen zu verschließen, um an der Wand ablaufende Flüssigkeit zurück in die Packung zu lenken. Ohne diese Dichtwirkung würde die Flüssigkeit ungehindert zum Kolonnensumpf laufen können und die Trennwirkung der Kolonne wäre stark beeinträchtigt.

Erfindungsgemäß kann dieser Spalt mit Glasgewebe geschlossen werden. Handelt es sich bei kleineren Kolonnendurchmessern um nicht segmentierte Packungen (d.h. eine Packungseinheit deckt den gesamten Kolonnenquerschnitt ab), so kann diese Packung vor dem Einbau mit Glasgewebeband umwickelt werden. Man wählt die Stärke der Wicklung dabei so, daß die Packung nach Einbau durch die Wicklung hinreichend fest in ihrer Position gehalten wird. Eine zusätzliche Fixierung des Glasgewebes gegen Verrutschen ist oft nicht erforderlich, kann aber einfach durch Festbinden mit Glasgewebegarn erfolgen.

Bei größeren Kolonnen werden die Packungen segmentiert, d.h. aus mehreren Elementen je Lage zusammengesetzt. Gerade bei emaillierten Kolonnen und Einbauten aus Keramik kommt es dann oft zu eher großen Randspalten von mehreren Zentimetern. Hier bietet es sich an, das Glasgewebeband entsprechend geformt in den Zwischenraum zu drücken, wobei unterschiedliche Ausführungsformen denkbar sind. Durch Einklemmen zwischen zwei Packungslagen kann das Band gegen Verrutschen gesichert werden. Mehrere solcher Ausführungsformen sind nachfolgend skizziert. Die Auswahl ist beispielhaft und soll nicht den Eindruck erwecken, daß die dargestellten Methoden die einzig möglichen sind.

Im Betrieb saugt sich das Glasgewebeband mit der umgebenden Flüssigkeit rasch voll und stellt dann durch die Kapillarkräfte, die die Flüssigkeit in ihm festhaltenen, eine Barriere dar, so daß weitere auftreffende Flüssigkeit nicht ungehindert durchdringen kann, sondern in die Packung geleitet wird und eine Randabdichtung der Packung bewirkt.

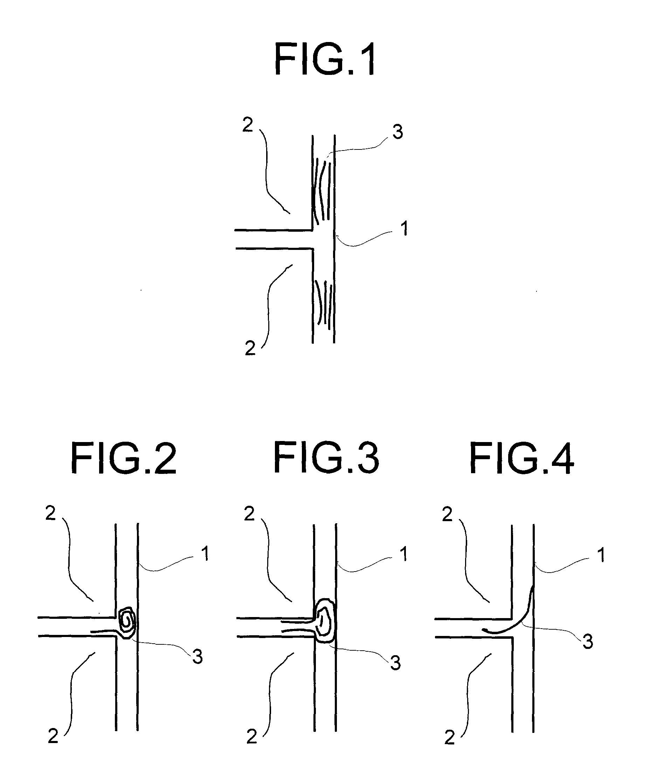

Einige beispielhaften Abdichtungsmöglichkeiten sind in den Figuren 1 bis 4 dargestellt. Es ist die Kolonnenwand (1), die strukturierten Packungen (2) sowie das Glasgewebeband (3) zur Abdichtung zu sehen.

### Glasgewebe als Kolonnenhemd in Kolonnen mit Schüttungen

In emaillierten Kolonnen mit Füllkörperschüttungen z.B. aus Glas oder Keramik besteht das Problem, daß die punktuelle Berührung der Füllkörper mit der Wand zu Druckspitzen und dadurch zu Emailschäden führt. Gerade beim Betrieb einer Kolonne mit Druckschwankungen (weitsiedende Gemische) können solche Probleme verstärkt auftreten. Erfindungsgemäß kann dieses Problem dadurch gelöst werden, daß man zwischen die Füllkörper und die Kolonnenwand eine durchgehende Schicht aus Glasgewebe aufbringt. Dessen Flexibilität ermöglicht eine Lastverteilung und dadurch eine Schonung des Emails. Dabei kann das Glasgewebe in unterschiedlicher Art und Weise eingebracht werden. Es kann ein- oder mehrlagig eingebaut werden, wobei die einzelnen Lagen sowohl parallel als auch in einem Winkel zueinander liegen können. Vorteilhaft ist es, wenn die Lagen so übereinander zu liegen kommen, daß die Stoßfugen einer Lage durch die nächste Lage überdeckt werden. Vorteilhaft ist es, das Gewebe zylindrisch gefaltet in die Kolonne zu geben, wobei der Durchmesser des Zylinders kleiner als der Innendurchmesser der Kolonne sein muß. Nach dem Einlassen passt sich das Glasgewebe dann durch Weitung des zylindrischen Durchmessers an die Kolonnenwand an, wodurch ein Verrutschen im Betrieb vermieden werden kann.

Die Bahnen können in der Kolonne prinzipiell in jeder Ausrichtung eingebaut werden. Es ist jedoch im Hinblick auf die Befüllung der Kolonne vorteilhaft, sie wahlweise parallel zur Kolonne als auch in Form von Ringen oder schraubenförmig quer zur Kolonne einzubauen. So kann man beispielsweise beim Aufbau der Kolonne, wenn Sumpf und Schuß bereits montiert sind, Glasgewebebahnen im Sinne einer Gardine in die Kolonne hineinhängen, wobei darauf geachtet werden muß, daß die zu schützende Emailschicht vollständig abgedeckt wird. Anschließend oder bereits vorher wird Wasser oder ein anderes geeignetes Medium in die Kolonne gefüllt, um die Sinkgeschwindigkeit der Füllkörper zu bremsen. Anschließend können die Füllkörper eingefüllt werden, wobei sie das Glasgewebe an die Kolonnenwand andrücken und somit fixieren.

Müssen auch kompliziert geformte Bereiche an der Kolonne wie Auflagepunkte, Verjüngungen oder Stutzen (z.B. Temperaturmeßstellen, Probenahmen) gegen die mechanische Einwirkung geschützt werden, so kann dies erfindungsgemäß ebenfalls mit Glasgewebe erfolgen, wobei man dieses vorteilhaft in eine entsprechende Form bringt und gegebenenfalls mit Glasgewebegarn fixiert.

### Glasgewebe als Zwischenlage auf Tragrosten

Eine ähnliche Aufgabe wie bei Kolonnen mit Füllkörperschüttungen, nämlich mechanischer Schutz durch Lastverteilung, muß an Auflagepunkten in der Kolonne gelöst werden, beispielsweise zwischen geordneten Packungen und Tragrosten oder zwischen Tragrosten und Haltepunkten in der Kolonne. Auch hier kann erfindungsgemäß Glasgewebe aufgrund seiner Flexibilität und Kompressibilität eingesetzt werden. Es kann ein- oder mehrlagig eingebaut werden, wobei sich die Anordnung nach der Form des Tragrostes richtet. Es ist möglich, das Glasgewebe mittels Glasgewebegarn zu fixieren, um ein Verrutschen beim Einbau oder im späteren Betrieb z.B. bei Siedeverzügen sicher zu vermeiden.

Eine bevorzugte Anwendung des erfindungsgemäßen Verfahrens ist die trenntechnische Aufbereitung von Methansulfonsäure. Diese ist allgemein in der DE 26 43 000 beschrieben und auch hier wird aufgrund der korrosiven Verhältnisse Glas als Werkstoff empfohlen. Durch das erfindungsgemäße Verfahren kann auch hier der unerwünschte Austritt fluorhaltiger Verbindungen stark verringert werden.

### Beispiel

Die Anlage bestand aus einer Glaskolonne mit 43 mm Innendurchmesser und einer Länge von 1,2 m mit Seitenzulauf, einem magnetisch gesteuertem Rücklaufteiler mit Kopfkondensator aus Glas (Kühlmedium Wasser) und einem ölbeheiztem Glasverdampfer als Sumpf. Die Glaskolonne besaß einen evakuierten Doppelmantel und war mit geordneten keramischen Packungen (Länge jeder Packung 10 bzw. 17 cm, Durchmesser 39 mm, Gesamtpackungslänge ca. 1 m) bestückt. Der Kopfdruck in der Kolonne betrug zwischen 12 und 15 mbar.

Auf den Seitenzulauf wurde 400-800 g/h einer Mischung bestehend aus 97% Methansulfonsäure, 1% Wasser und 1% Schwefelsäure gegeben. Im Kopf wurde kontinuierlich Methansulfonsäure abgezogen, im Sumpf ein Gemisch aus 10-18% Schwefelsäure und 90-82% Methansulfonsäure. Die Sumpftemperatur lag bei 185-190°C, die Kopftemperatur bei 149-156°C.

Tabellarisch erfaßt sind die verwendeten Dichtungsmaterialien zwischen den Glasapparaten sowie die eingesetzte Packungsrandabdichtung zwischen Packung und Kolonneninnenwand. Im Zulauf lag der Fluoridgehalt bei ca. 1-2 ppm

| | Apparatedichtungen | Randabdichtungen | Fluoridgehalt Sumpf |
|---|---|---|---|
| Beispiel 1 | Graphit | Glasgewebe | 3-5 ppm |
| Beispiel 2 | PTFE | Glasgewebe | 3-5 ppm |
| Vergleichsbeispiel 3 | PTFE | PTFE-Schnur | 15-25 ppm |

Bei den Graphitdichtungen handelte es sich z.B. um Sigraflex-Flachdichtungen der Fa. SGL Carbon, bei den PTFE-Flachdichtungen z.B. um Gylon blau der Fa. Garlock, bei dem Glasgewebe um ca. 2 mm starkes, 3 cm breites Glasgewebeband der Fa. Markert, bei der PTFE-Schnur um ca. 3-4 mm starke Gore-Schnur.

Schnur bzw. Glasgewebeband wurden jeweils am oberen und am unteren Ende jedes keramischen Packungselements um dasselbe gewickelt, so daß sich das Element nur noch unter Kraftaufwand in die Kolonne schieben ließ. Die Gore-Schnur wurde einlagig leicht ansteigend, das Glasgewebe 1-2lagig gewickelt.

Anhand der Zusammensetzung der Destillatströme war kein Unterschied in der Trennleistung bei den einzelnen Versuchen erkennbar. Das Randverhalten der Flüssigkeit in der Kolonne wurde optisch in allen Versuchen gleich beurteilt.

Wurde die Anlage mehrere Wochen unter den Bedingungen des Vergleichsbeispiels (3) betrieben, so war Angriff am Glas bevorzugt im Sumpf als Aufrauhung erkennbar.

## Patentansprüche

1. Verfahren zur Aufbereitung von Stoffen in chemischen Apparaten mit Einbauten zum Stoffaustausch **dadurch gekennzeichnet, dass** man stabilisiertes Fasermaterial als Randabdichtung und/oder mechanischer Schutz einsetzt.

2. Verfahren nach Anspruch 1, **dadurch gekennzeichnet, dass** man als chemischen Apparat mit Einbauten zum Stoffaustausch Destillations-, Rektifikations-, Extraktions-, Adsorptions- und/oder Reaktionskolonnen einsetzt.

3. Verfahren nach den Ansprüchen 1 bis 2, **dadurch gekennzeichnet, dass** man emaillierte Apparate einsetzt.

4. Verfahren nach den Ansprüchen 1 bis 3, **dadurch gekennzeichnet dass** man stabilisiertes Fasermaterial in Form eines ein- oder mehrlagigen, geordnet geflochten oder gewebten oder ungeordnet filzartigen Gewebes in Streifen-, Bahnen oder Schlauchform einsetzt.

5. Verfahren nach den Ansprüchen 1 bis 4, **dadurch gekennzeichnet, dass** man bei mehrlagigem Einsatz des Fasermaterials eine Abdeckung von Stoßfugen bewirkt.

6. Verfahren nach den Ansprüchen 1 bis 5, **dadurch gekennzeichnet dass** man das Fasermaterial bei Kolonnen mit strukturierten Packungen als Randabdichtung zwischen Packung und Kolonnenwand einsetzt.

7. Verfahren nach den Ansprüchen 1 bis 5, **dadurch gekennzeichnet dass** man das Fasermaterial bei Kolonnen mit Füllkörperschüttungen als Schutzlage zwischen Schüttung und Kolonnenwand einsetzt.

8. Verfahren nach den Ansprüchen 1 bis 7, **dadurch gekennzeichnet dass** man das Fasermaterial sowohl bei Kolonnen mit strukturierten Packungen als auch bei Kolonnen mit Füllkörperschüttungen als Schutzlage zwischen Packung bzw. Schüttung und Tragrost einsetzt.

9. Verfahren nach den Ansprüchen 1 bis 8, **dadurch gekennzeichnet dass** man das Fasermaterial sowohl bei Kolonnen mit strukturierten Packungen als auch bei Kolonnen mit Füllkörperschüttungen als Schutzlage zwischen Tragrost und Auflagepunkten einsetzt.

10. Verfahren nach den Ansprüchen 1 bis 9, **dadurch gekennzeichnet dass** man den Apparat nach Einbau des Fasermaterials durch Spülen von Fasermaterialresten, die von dem verbauten Fasermaterial stammen, vor Aufarbeitung der Stoffe reinigt.

11. Verfahren nach den Ansprüchen 1 bis 10, **dadurch gekennzeichnet dass** man als Fasermaterial Glasfasern oder Kohlefasern, bevorzugt Glasfasergewebe einsetzt.

12. Verfahren nach den Ansprüchen 1 bis 11, **dadurch gekennzeichnet dass** man die Aufarbeitung der Stoffe in Gegenwart korrosiver Medien durchführt.

13. Verfahren nach den Ansprüchen 1 bis 12, **dadurch gekennzeichnet dass** man die Aufarbeitung der Stoffe bei Temperaturen oberhalb 60°C durchführt.

14. Verfahren nach den Ansprüchen 1 bis 13, **dadurch gekennzeichnet dass** man Methansulfonsäure trenntechnisch aufbereitet.

15. Verwendung von Fasermaterial zur Durchführung der Verfahren gemäss Anspüchen 1 bis 14.
